# EUROPÄISCHE PATENTANMELDUNG

(11) **EP 3 219 425 A1**
(43) Veröffentlichungstag der Anmeldung: **20.09.2017**
(21) Anmeldenummer: 17161389.6
(22) Anmeldetag: 16.03.2017
(51) Int. Cl.: B23D 47/04, B26D 7/02

(54) **VORRICHTUNG ZUM SPANNEN VON EINER AUS WENIGSTENS EINEM PROFIL BESTEHENDEN LAGE IN EINER TRENNEINRICHTUNG**

(30) Priorität: 18.03.2016 DE 102016105123
(71) Anmelder: RSA cutting systems GmbH, 58239 Schwerte (DE)
(72) Erfinder: Feldhoff, Stephan, 51709 Marienheide (DE); Berg, Thomas, 44149 Dortmund (DE)
(74) Vertreter: Ostriga Sonnet Wirths & Vorwerk

(57) **Zusammenfassung**

Die vorliegende Erfindung betrifft eine Vorrichtung (10) zum Spannen einer aus wenigstens einem Profil (16) bestehenden Lage (15) in einer Trenneinrichtung (19), wobei die Trenneinrichtung als ein sich um eine Rotationsachse drehendes Sägeblatt (18) ausgebildet ist, im Wesentlichen bestehend aus mindestens zwei jeweils quer zur Bewegungsrichtung geteilten Spannvorrichtungen, zwischen denen die Trenneinrichtung angeordnet ist, wobei zwischen den geteilten Spannvorrichtungen wenigstens ein Profil angeordnet sowie während des Trennvorgangs verspannt ist.
Es wird vorgeschlagen, dass jeder Teil der Spannvorrichtung aus zwei vertikal gegeneinander wirkenden und zwei horizontal gegeneinander wirkenden Spannbacken (20, 20, 21, 21) gebildet wird.

## Beschreibung

Die Erfindung betrifft eine Vorrichtung zum Spannen einer aus wenigstens einem Profil bestehenden Lage in einer Trenneinrichtung, wobei die Trenneinrichtung als ein sich um eine Rotationsachse drehendes Sägeblatt ausgebildet ist, im Wesentlichen bestehend aus mindestens zwei jeweils quer zur Bewegungsrichtung geteilten Spannvorrichtungen, zwischen denen die Trenneinrichtung angeordnet ist, wobei zwischen den geteilten Spannvorrichtungen wenigstens ein Profil angeordnet sowie während des Trennvorgangs verspannt ist.

Aus dem druckschriftlich nicht belegbaren Stand der Technik ist eine derartige Vorrichtung allgemein bekannt. Hierbei weist mindestens eine der Spannbacken der Spannvorrichtung eine an den Durchmesser des zu spannenden Profils angepasste Kontur auf, damit die Profillage während des Spannprozesses bzw. der Trennung des wenigstens einen Profils exakt fixiert werden kann.

Der Begriff Profil umfasst einerseits längliche Vollprofile sowie Hohlprofile (Rohre) und andererseits auch Voll- und Hohlprofile mit unterschiedlichen Querschnitten, wie Vierkantprofile oder Kreiszylinderprofile.

Diese an sich vorteilhafte Vorrichtung weist den Nachteil auf, dass in einer Trenneinrichtung für unterschiedliche Profildurchmesser oder -querschnitte jeweils unterschiedliche Spannbacken für abweichende Profile notwendig sind.

Die Aufgabe der Erfindung besteht deshalb darin, eine neue Vorrichtung zum Spannen einer aus wenigstens einem Profil bestehenden Lage in einer Trenneinrichtung zu schaffen, welche in Bezug auf unterschiedliche Profildurchmesser oder -querschnitte universeller einsetzbar ist.

Die Lösung der Aufgabe ergibt sich aus den Merkmalen des nachfolgenden Anspruchs 1:
Vorrichtung zum Spannen einer aus wenigstens einem Profil bestehenden Lage in einer Trenneinrichtung, wobei die Trenneinrichtung als ein sich um eine Rotationsachse drehendes Sägeblatt ausgebildet ist, im Wesentlichen bestehend aus mindestens zwei jeweils quer zur Bewegungsrichtung geteilten Spannvorrichtungen, zwischen denen die Trenneinrichtung angeordnet ist, wobei zwischen den geteilten Spannvorrichtungen wenigstens ein Profil angeordnet sowie während des Trennvorgangs verspannt ist, dadurch gekennzeichnet, dass jeder Teil der Spannvorrichtung aus zwei vertikal gegeneinander wirkenden und zwei horizontal gegeneinander wirkenden Spannbacken gebildet wird.

Die erfindungsgemäße Vorrichtung weist den grundsätzlichen Vorteil auf, dass mit ihr das Verspannen und Trennen von einem Profil sowie Lagen aus Profilen mit unterschiedlichem Durchmesser bzw. Querschnitt ohne Austausch der Spannbacken möglich ist. Durch diesen Vorteil werden die Kosten für die Spanneinrichtung deutlich gesenkt.

Bei einer vorteilhaften Ausführungsform der Erfindung weisen in jeder Teilspannvorrichtung die zwei vertikal oder horizontal gegeneinander wirkenden Spannbacken einen separaten Antrieb auf. Vorzugsweise kann dieser Antrieb als Servomotor mit Spindel ausgebildet sein.

Bei einer weiteren vorteilhaften Ausführungsform der Erfindung ist der in Bewegungsrichtung des wenigstens einen Profils vorne liegende Teil der Spannvorrichtung relativ zum anderen Teil der Spannvorrichtung verfahrbar.

Diese Vorrichtung ist auf vorteilhafte Weise zur besseren Ausnutzung bzw. Minimierung der Reststücke einsetzbar. Konkret bedeutet dies, dass einerseits eine Reststück-Lage, welche in der Spannvorrichtung angeordnet ist, jedoch von einer Vorrichtung zur Zuführung von Profilen zur Spann- bzw. Trenneinrichtung nicht mehr erfasst wird. Andererseits kann die Reststück-Lage, die länger ist als die gewünschte von der Trenneinrichtung hergestellte Profillänge, durch den vorne liegenden Teil der Spannvorrichtung in Bewegungsrichtung der Profile so weit vorgezogen werden, dass diese zum Zwecke eines weiteren Trennschnittes verspannt werden kann. Im Ergebnis fallen mit Hilfe dieser vorteilhaften Vorrichtung nur noch sehr kleine, nicht mehr verwendbare Reststücke an.

Auf vorteilhafte Weise kann dieser vordere Teil der Spannvorrichtung in Bewegungsrichtung des wenigstens einen Profils mittels einer motorisch angetriebenen Spindel verfahren werden.

Weitere Vorteile der Erfindung ergeben sich aus der nachfolgenden Beschreibung eines Ausführungsbeispiels. Es zeigen:
Fig. 1 eine schematische Diagonalansicht einer Lagensäge,
Fig. 2 eine Schnittdarstellung gemäß Schnittlinie II-II in Fig. 1,
Fig. 3 bis 7 schematische Schnittdarstellungen durch Spanneinrichtung und Trenneinrichtung in unterschiedlichen Einsatzfällen und
Fig. 8 bis 12 schematische Draufsichten auf die Spanneinrichtung in unterschiedlichen Betriebssituationen.

In den Zeichnungen ist eine Spannvorrichtung insgesamt mit der Bezugsziffer 10 bezeichnet.

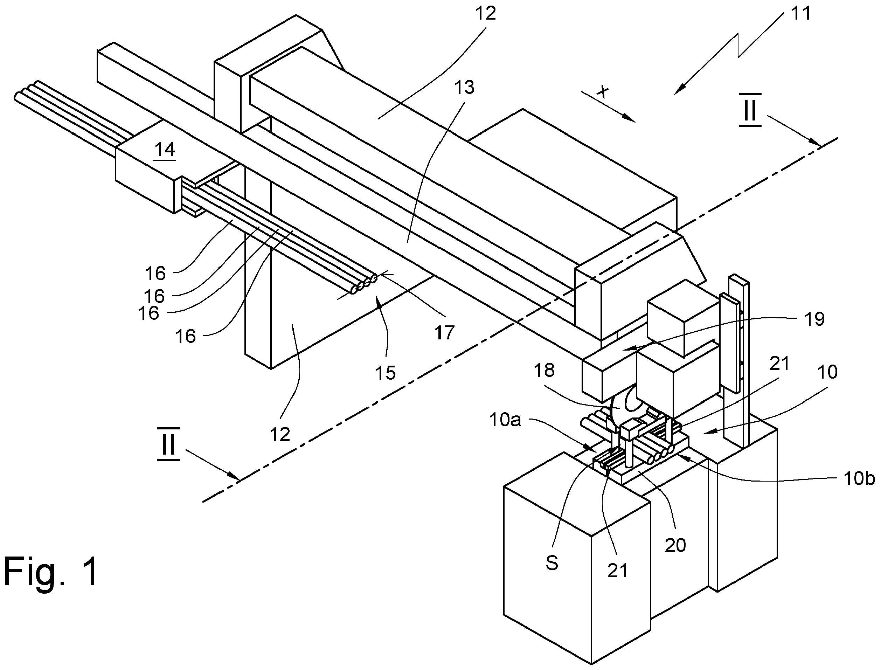

Die Spannvorrichtung 10 ist - wie in Fig. 1 dargestellt - Teil einer sogenannten Lagensäge 11, welche aus einer Grundkonstruktion 12 und einer Schiene 13 gebildet wird, an der ein Materialwagen 14 für eine Lage 15 bildende Rohre 16 in x-Richtung bewegbar angeordnet ist. Der Materialwagen 14 ist auf nicht dargestellte Weise ebenfalls mit einer Spannvorrichtung aus vertikal und horizontal wirkenden Spannbacken versehen.

Zwischen dem Materialwagen 14 und der Spannvorrichtung 10 ist auf ebenfalls nicht dargestellte Weise ein Bündig-Schubanschlag angeordnet, der dazu dient, Stirnflächen 17 der Rohre 16 der Lage 15 in dem Materialwagen 14 in eine zueinander bündige Position zu versetzen.

Die Spanneinrichtung 10 wird durch zwei Teilspannvorrichtungen 10a, 10b gebildet, zwischen denen ein Spalt S angeordnet ist. Die Teilspannvorrichtung 10b ist die in Bewegungsrichtung x vorne liegende, während die Teilspannvorrichtung 10a die in Bewegungsrichtung hintere Teilspannvorrichtung ist.

Oberhalb des Spaltes S ist ein Sägeblatt 18 einer Trennvorrichtung 19 vertikal bewegbar angeordnet.

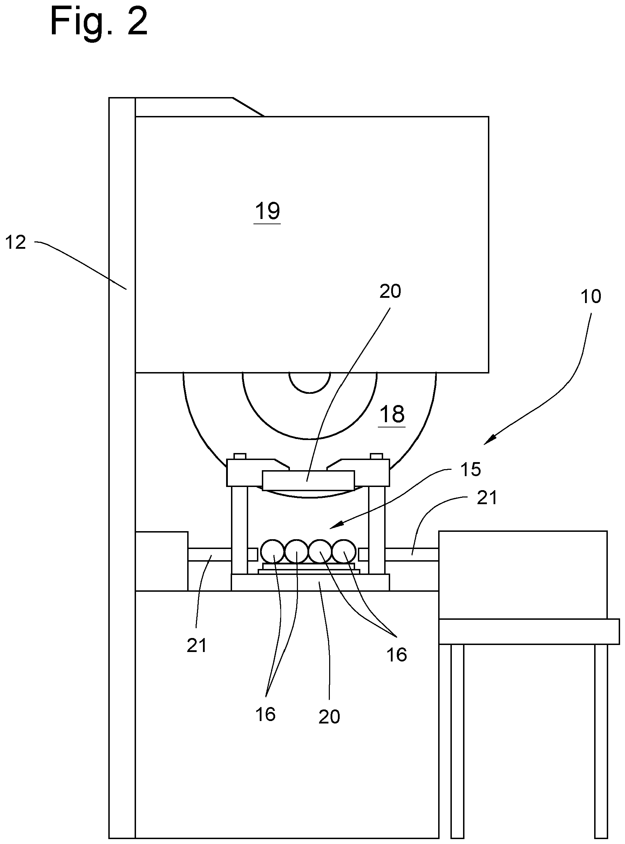

Aus den Fig. 1 und 2 sowie den Fig. 3 bis 7 ist erkennbar, dass jede Teilspannvorrichtung 10a, 10b aus zwei vertikal gegeneinander wirkenden Spannbacken 20 und zwei horizontal gegeneinander wirkende Spannbacken 21 gebildet wird. Die vertikal wirkende, untere Spannbacke 20 hat zugleich auch die Funktion der sogenannten Schnittunterstützung. Dies bedeutet, dass die untere Spannbacke 20 während des durch den Materialwagen 14 bewerkstelligten Vorschubs der Rohrlage 15 auch so weit abgesenkt werden, dass während des Vorschubs kein Kontakt zwischen der unteren Spannbacke 20 (Schnittunterstützung) und der Rohrlage 15 stattfindet.

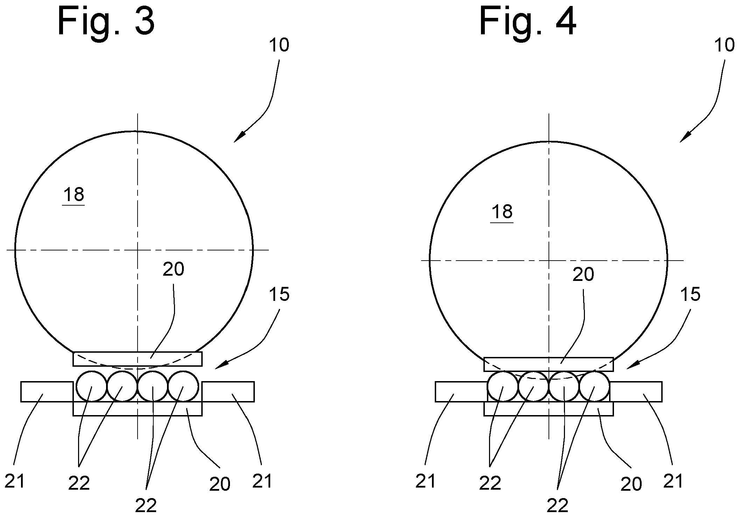

In den Fig. 3 bis 7 sind in schematischen Schnittzeichnungen verschiedene Betriebssituationen der Spannvorrichtung 10 dargestellt.

Die aus oberer und unterer Spannbacke 20 sowie den horizontal gegeneinander wirkenden Spannbacken 21 gebildete Spannvorrichtung 10 zeigt die Fig. 3, wobei auf der unteren vertikalen Spannbacke 20 (Schnittunterstützung) vier Rohre 22 einer Lage 15 angeordnet sind. Oberhalb der in Fig. 3 offen dargestellten Spannvorrichtung 10 ist ein Sägeblatt 18 zu erkennen.

Auf nicht dargestellte Weise sind gemäß Fig. 4 durch jeweils einen separaten Antrieb die zwei vertikal gegeneinander wirkenden Spannbacken 20 sowie auch die zwei horizontal gegeneinander wirkenden Spannbacken 21 in Richtung der Rohrlage 15 bewegt worden, so dass diese vollständig verspannt wurden. In dieser Position ist es nun möglich, dass das Sägeblatt 18 abgesenkt wird und gewünschte Rohrlängen erstellt werden.

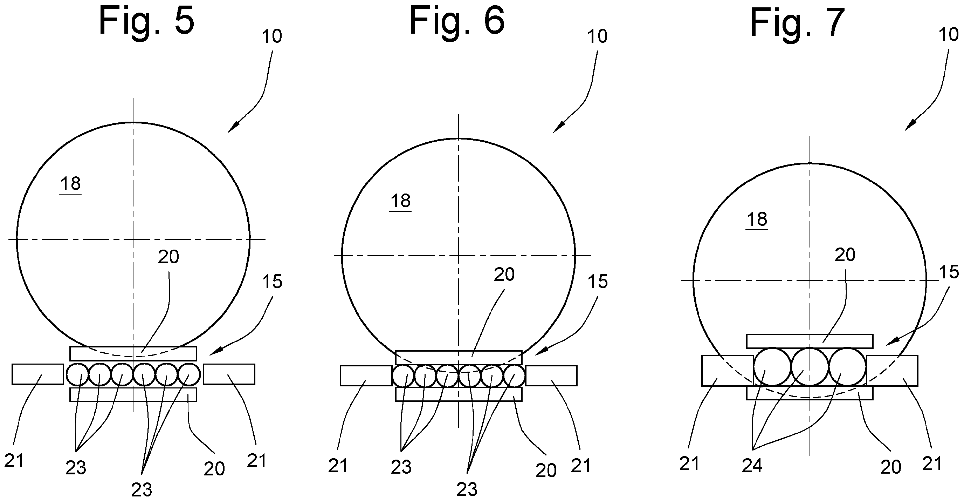

In den Fig. 5 und 6 ist der offene bzw. der geschlossene Zustand derselben Spannvorrichtung 10 bzw. 10a, 10b dargestellt wie in den Fig. 3 und 4, wobei jedoch zu erkennen ist, dass stattdessen Rohre 23 mit einem geringeren Durchmesser in der Spannvorrichtung 10 angeordnet sind.

Zusammenfassend wird daraus deutlich, dass es mit ein und derselben Spannvorrichtung 10 möglich ist, einen größeren Durchmesserbereich von Rohren zu verspannen, damit die Rohre in gewünschte Längen zerteilt werden können.

Letztlich zeigt die Fig. 7, dass durch Austausch der horizontal gegeneinander wirkenden Spannbacken 21 auch Rohre 24 mit deutlich größerem Rohrdurchmesser verspannbar sind, wobei in dieser Darstellung bereits das Sägeblatt 18 die Rohrlage 15 durchtrennt hat.

Grundsätzlich muss die Höhe der horizontal wirkenden Spannbacken 21 größer sein als der Radius der zu verspannenden Rohre. Darüber hinaus muss jedoch auch die Höhe der horizontal wirkenden Spannbacken 21 kleiner sein als der Durchmesser der zu verspannenden Rohre, damit während des Spannvorgangs die vertikalen Spannbacken 20 nicht mit den horizontal wirkenden Spannbacken 21 kollidieren.

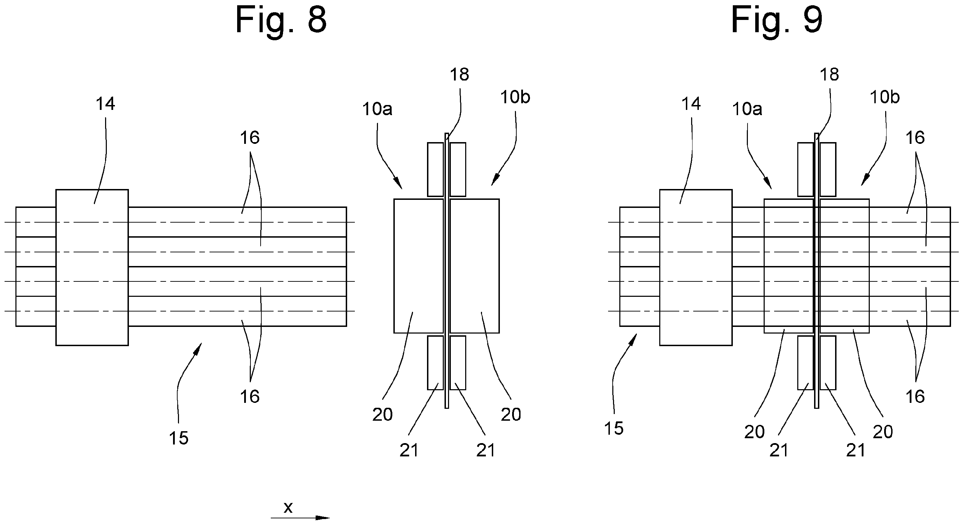

In der Fig. 8 ist in einer schematischen Draufsicht zum einen die Spannvorrichtung 10 mit den Teilspannvorrichtungen 10a, 10b einschließlich des Sägeblatts 18 dargestellt. Zum anderen ist zu erkennen, dass in Bewegungsrichtung x durch den Materialwagen 14 eine bündig angeordnete Rohrlage 15 aus vier Rohren 16 zur Spannvorrichtung 10 bzw. zur Trenneinrichtung 19 transportiert wird.

In der Fig. 9 ist eine Situation dargestellt, bei der der Materialwagen 14 bereits die Rohrlage 15 in die Spannvorrichtung 10 transportiert hat, so dass nach dem Verspannen durch das Sägeblatt 18 ein Trennvorgang eingeleitet werden kann.

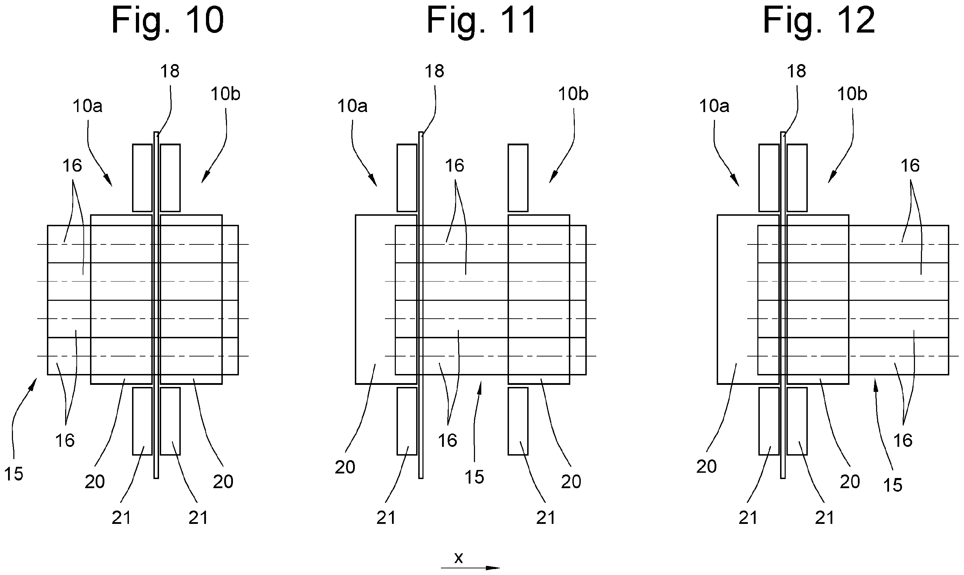

Relativ kurze Reststücke der die Rohrlage 15 bildenden Rohre 16, die innerhalb der Spannvorrichtung 10 angeordnet sind, zeigt die Fig. 10. In dieser Stellung der Rohrlage 15 ist jedoch der Materialwagen 14 nicht mehr in der Lage, den Vorschub der Rohrlage 15 in Bewegungsrichtung x zu veranlassen. Jedoch ist die Länge der Reststücke im vorliegenden Fall größer als die Länge der in der Trennvorrichtung 19 herzustellenden Rohrabschnitte.

Vor diesem Hintergrund ist - wie im Einzelnen nicht dargestellt - die Teilspannvorrichtung 10b mit einem Antrieb verbunden, mit dem sie sich in Bewegungsrichtung x relativ zur Teilspannvorrichtung 10a bewegen kann. Konkret bedeutet dies, dass vor der genannten Relativbewegung die Teilspannvorrichtung 10a gelöst wird und die Teilspannvorrichtung 10b verspannt wird. Aufgrund der Relativbewegung der Teilspannvorrichtung 10b gegenüber der Teilspannvorrichtung 10a wird dann die Rohrlage 15 in Bewegungsrichtung x bewegt, wobei die Länge dieser Bewegung der gewünschten Rohrlänge entspricht (s. Fig. 11).

Nachdem die Teilspannvorrichtung 10a wieder verspannt worden ist und die Teilspannvorrichtung 10b entspannt worden ist, fährt letztere entgegen der Bewegungsrichtung x wieder bis zum Anschlag an die Teilspannvorrichtung 10a (vgl. Fig. 12).

In dieser Position kann nun auch die Teilspannvorrichtung 10b wieder verspannt werden und mittels des Sägeblatts 18 ein neuer Trennvorgang durchgeführt werden.

Auf vorteilhafte Weise verbleibt letztlich nur noch ein ganz kurzes Reststück und die Rohrlage 15 ist insgesamt optimal ausgenutzt worden.

### Bezugszeichenliste

- 10: Spannvorrichtung
- 10a: Teilspannvorrichtung
- 10b: Teilspannvorrichtung
- 11: Lagensäge
- 12: Grundkonstruktion
- 13: Schiene
- 14: Materialwagen
- 15: Rohrlage
- 16: Rohre
- 17: Stirnfläche
- 18: Sägeblatt
- 19: Trennvorrichtung
- 20: vertikale Spannbacken
- 21: horizontale Spannbacken
- 22: Rohre
- 23: Rohre
- 24: Rohre
- S: Spalt
- x: Bewegungsrichtung

## Patentansprüche

1. Vorrichtung (10) zum Spannen einer aus wenigstens einem Profil (16, 22, 23, 24) bestehenden Lage (15) in einer Trenneinrichtung (19), wobei die Trenneinrichtung (19) als ein sich um eine Rotationsachse drehendes Sägeblatt (18) ausgebildet ist, im Wesentlichen bestehend aus mindestens zwei jeweils quer zur Bewegungsrichtung (x) geteilten Spannvorrichtungen (10a, 10b), zwischen denen die Trenneinrichtung (19) angeordnet ist, wobei zwischen den geteilten Spannvorrichtungen (10a, 10b) wenigstens ein Profil (16, 22, 23, 24) angeordnet sowie während des Trennvorgangs verspannt ist, **dadurch gekennzeichnet, dass** jeder Teil der Spannvorrichtung (10a, 10b) aus zwei vertikal gegeneinander wirkenden und zwei horizontal gegeneinander wirkenden Spannbacken (20, 21) gebildet wird.

2. Vorrichtung (10) nach Anspruch 1, **dadurch gekennzeichnet, dass** in jeder Teilspannvorrichtung (10a, 10b) die zwei vertikal oder horizontal gegeneinander wirkenden Spannbacken (20, 21) einen separaten Antrieb aufweisen.

3. Vorrichtung (10) nach Anspruch 2, **dadurch gekennzeichnet, dass** der Antrieb als Servomotor mit Spindel ausgebildet ist.

4. Vorrichtung (10) nach einem der vorangehenden Ansprüche, dass der in Bewegungsrichtung (x) des wenigstens einen Profils (16, 22, 23, 24) vorneliegende Teil der Spannvorrichtung (10b) relativ zum anderen Teil der Spannvorrichtung (10a) verfahrbar ist.

5. Vorrichtung (10) nach Anspruch 4, **dadurch gekennzeichnet, dass** der in Bewegungsrichtung (x) vordere Teil der Spannvorrichtung (10b) mittels einer motorisch angetriebenen Spindel verfahrbar ist.
